# EUROPEAN PATENT SPECIFICATION

(11) **EP 4 123 874 B1**
(45) Date of publication and mention of the grant of the patent: **23.10.2024**
(21) Application number: 21187387.2
(22) Date of filing: 23.07.2021
(51) Int. Cl.: H02J 50/10, H02J 9/02, H02J 9/06, H02J 50/80, H05B 47/19

(54) **POWER SUPPLY DEVICE FOR WIRELESS SUPPLY OF ELECTRICAL POWER TO AN EMERGENCY LUMINAIRE**
STROMVERSORGUNGSVORRICHTUNG ZUR DRAHTLOSEN VERSORGUNG EINER NOTLEUCHTE MIT ELEKTRISCHEM STROM
DISPOSITIF D'ALIMENTATION ÉLECTRIQUE POUR L'ALIMENTATION SANS FIL D'ÉNERGIE ÉLECTRIQUE À UN LUMINAIRE DE SECOURS

(43) Date of publication of application: 25.01.2023
(73) Proprietor: Tridonic GmbH & Co. KG, 6851 Dornbirn (AT)
(72) Inventor: Wilson, Ian, 6850 Dornbirn (AT)
(74) Representative: Beder, Jens

(56) References cited:
- EP-A1- 3 716 731
- CN-A- 108 879 832
- CN-A- 111 262 332
- US-A1- 2005 212 454
- US-A1- 2010 194 206
- US-A1- 2010 327 766

## Description

The present invention relates to an emergency lighting system comprising an emergency luminaire and a power supply device for a wireless supply of electrical power to the emergency luminaire.

In the prior art, emergency luminaires are well known. An emergency luminaire is configured to provide light emission to an area (e.g. of a building or an outdoor area), in which the emergency luminaire is arranged, in case of an emergency operation state. The emergency operation state corresponds to a state during which electrical energy supply from mains malfunctions or fails due to an emergency situation. Such an emergency situation may comprise or correspond to a fire in a building leading to interruption of electrical energy supply from mains in a part of the building or the whole building; mains failure etc. Mains may provide an AC voltage of 230 V with a frequency of 50 Hz or 60 Hz.

An emergency luminaire may comprise an emergency sign element displaying an emergency sign such that light emitted by a light source of the emergency luminaire lights the emergency sign. Such an emergency luminaire may be referred to as emergency sign luminaire.

In order to be able to provide light in the emergency operation state, an emergency luminaire needs to comprise an electrical energy storage that provides, instead of mains, the electrical power for the light emission. The terms "electrical power" and "electric power" may be used as synonyms and may be abbreviated by the term "power". The electrical energy storage of the emergency luminaire has the disadvantage that the emergency luminaire may not be installed in an environment (very cold or hot environment) causing malfunction of the electrical energy storage and, thus, preventing the function of the emergency luminaire, namely providing light in the emergency operation state. Furthermore, installing the emergency luminaire in an environment (hazardous environment) with a temperature unsuitable for the electrical energy storage may reduce the lifetime of the electrical energy storage. In addition, the heat generated by the light source of the emergency luminaire may reduce the lifetime of the electrical energy storage. As a result, there may be a need of changing the electrical energy storage of the emergency luminaire.

Furthermore, the electrical energy storage of the emergency luminaire may reduce the overall lifetime of the emergency luminaire in case the lifetime of the electrical energy storage is reduced due to environmental issues, such as very cold temperatures (e.g. as low as - 40°C) or hot temperatures. Therefore, in order to ensure reliability of an emergency luminaire, the electrical energy storage of the emergency luminaire needs to be replaceable so that the electrical energy storage may be replaced in case of a reduced lifetime or failure of the electrical energy storage. Sealing all the electrical components including the electrical energy storage of the emergency luminaire would not make it possible to replace the electrical energy storage. As a result, the electrical components of the emergency luminaire may not be easily sealed in a housing for protection against environmental influences, such as water, dust etc. This increases costs, effort and size of emergency luminaires for achieving a protection of the electrical components of the emergency luminaire against environmental influences. In particular, costs, effort and size of providing an IP rated emergency luminaire are increased. In particular, it may not be possible to provide an emergency luminaire, wherein all electrical components are completely sealed. The abbreviation "IP" stands for "International Protection" respectively "Ingress Protection", which is a standard (IEC standard 60529) for protecting components against environmental influences, such as water, dust etc. That is, since there needs to be an access for servicing to the electrical energy storage of the emergency luminaire, providing IP protection of the emergency luminaire may be difficult.

An emergency lighting system, in which all features of the preamble of claim 1 are disclosed, is described in US 2010/327766 A1.

EP 3 716 731 A1 discloses a driver module for electrically supplying lighting means, in which an isolation barrier galvanically isolates a primary side and a secondary side of the isolated driver module.

US 2005/212454 A1 discloses a pathway lighting system comprising a carrier having a plurality of primary coils disposed at predetermined positions along the carrier and a plurality of sealed lighting modules each including a secondary coil for electromagnetic connection to any one primary coil.

US 2010/194206 A1 discloses a wireless power charging system comprising transmit circuitry and at least one antenna coupled to the transmit circuitry and configured to wirelessly transmit power within an associated near-field region.

CN 111 262 332 A discloses an emergency lighting system comprising a lighting module and a transmitting module for a wireless supply of electrical power to the lighting module.

CN 108 879 832 A discloses an emergency lighting system comprising an emergency lamp and a charger for wirelessly charging the emergency lamp.

It is an object of the present invention to provide an emergency lighting system that allow an emergency luminaire to be installed in an environment that is unsuitable for an electrical energy storage (e.g. a battery) and, thus, has an negative effect on the lifetime of the electrical energy storage.

These and other objects, which become apparent upon reading the following description, are solved by the subject-matter of the independent claim 1. The dependent claims refer to preferred embodiments of the invention.

According to the invention, an emergency lighting system comprising an emergency luminaire and a power supply device for a wireless supply of electrical power to the emergency luminaire is provided. The power supply device comprises electrical coupling means for a wireless power transfer, and an electrical energy storage. The power supply device is configured to wirelessly supply electrical power from the electrical energy storage of the power supply device to the emergency luminaire, via a wireless transfer of the electrical power from the electrical coupling means of the power supply device to electrical coupling means of the emergency luminaire.

Thus, the invention proposes to arrange the electrical energy storage for an emergency luminaire outside the emergency luminaire and provide a power supply device comprising the electrical energy storage. This allows installing the emergency luminaire in an environment that is unsuitable for the electrical energy storage and that has a negative effect on the lifetime of the electrical energy storage. Moreover, the heat generated by a light source of the emergency luminaire does not has a negative effect on the electrical energy storage when providing the electrical energy storage outside the emergency luminaire. In addition, the size of the emergency luminaire may be reduced since there is no space needed in the emergency luminaire for the electrical energy storage that may be bulky. By using a wireless transfer of electrical power from the electrical energy storage of the power supply device to the emergency luminaire for electrically supplying the emergency luminaire there is no need of wiring between the power supply device and the emergency luminaire. This reduces costs and effort for installing the emergency luminaire and the power supply device to provide an emergency lighting to an area. In addition, the electrical components of the emergency luminaire may be easily sealed in a housing without the need to provide openings for electrical supply wiring to the outside of the housing. As a result, there is no need of sealing such openings for the electrical supply wiring in order to keep the protection offered by the housing to the electrical components of the emergency luminaire that are sealed respectively enclosed by the housing. Therefore, the power supply device allows to easily provide an IP protection (i.e. protection against water, dust etc.) to the electrical components of the emergency luminaire by sealing the electrical components in a housing of the luminaire.

In addition, for wirelessly supplying the emergency luminaire the power supply device may be placed at a different location compared to the emergency luminaire. Thus, the power supply may be installed at an area suitable for the electrical energy storage, wherein the emergency luminaire may be installed in an adjacent area that is unsuitable for the electrical energy storage. For example, the emergency luminaire may be arranged on one side of a wall and the power supply device may be placed on the other side of the wall such that the power supply device is configured to wirelessly supply electrical power to the emergency luminaire through the wall, optionally through an opening in the wall. On the one side of the wall the conditions may be unsuitable for the electrical energy storage (e.g. outside area or inside area without heating or air condition) and on the other side of the wall the conditions may be suitable for the electrical energy storage.

An emergency luminaire comprising an emergency sign element (e.g. an exit sign element or escape route sign element) that is lighted respectively illuminated by a light source of the emergency luminaire or displayed by the light source may be referred to as emergency sign luminaire (e.g. exit sign luminaire or escape route sign luminaire). The emergency sign element may comprise at least one emergency sign, e.g. at least one exit sign and/or at least one escape route sign. That is, the emergency luminaire may be an emergency sign luminaire. Such a light source of the emergency luminaire may comprise or correspond to one or more light emitting diodes (LEDs). The one or more LEDs may correspond to one or more organic LEDs, one or more inorganic LEDs and/or one or more other LEDs known in the art. The light source, in particular the one or more LEDs, may be configured to emit colored light, optionally light of at least two colors. The light source may be referred to as electrical light source. The light emission of the light source may be controllable by the amount of electrical power supplied to the light source.

The term "safety sign" may be used as a synonym for the term "emergency sign". The terms "safety sign" and "emergency sign" may be understood as referring to a sign that provides information to a person for increasing the safety of the person in an emergency situation. For example, an exit sign indicates the nearest exit for a person, thus providing a safe exit of an area in an emergency situation. An escape route sign indicating an escape route provides safety to the person in that it allows the person to escape in an emergency situation.

The electrical coupling means of the power supply device and the electrical coupling means of the emergency luminaire may be configured to be magnetically coupled to each other for a wireless power transfer. In other words, these two electrical coupling means may form a magnetic coupling system, preferably a high frequency magnetic coupling system. In particular, the electrical coupling means of the power supply device may be configured to wirelessly transfer electrical power to the electrical coupling means of the emergency luminaire via electromagnetic induction. That is, the electrical coupling means of the power supply device and the electrical coupling means of the emergency luminaire may be configured to be coupled to each other by electromagnetic induction for a wireless transfer of electrical power between them. In particular, the electrical coupling means of the power supply device may be configured to wirelessly transfer a power transfer signal to the electrical coupling means of the emergency luminaire for wirelessly transferring electrical power to the electrical coupling means of the emergency luminaire. The power transfer signal may be a high frequency (power transfer) signal. The wireless power transfer between the electrical coupling means of the power supply device and the electrical coupling means of the emergency luminaire may be a high frequency power transfer.

The term "transmit" may be used as a synonym for the term "transfer" and, thus, the term "power transmission" may be used as a synonym for the term "power transfer".

Transferring electrical power corresponds to transferring electrical energy. Thus, the present invention may also be described with respect to electrical energy. That is, the description herein using electrical power is correspondingly valid when referring to electrical energy instead of electrical power.

The electrical energy storage may comprise or correspond to one or more batteries and/or one or more capacitors (e.g. super capacitors). At least one, optionally all, of the one or more batteries may be rechargeable.

The power supply device may comprises an electrical supply circuit for the emergency luminaire configured for supplying electrical power to the emergency luminaire from at least the electrical energy storage of the power supply device (via a wireless transfer of the electrical power from the electrical coupling means of the power supply device to electrical coupling means of the emergency luminaire). As a result, the emergency luminaire does not need to comprise an electrical supply circuit, in particular one or more converters (e.g. one or more AC/DC converters), which maybe bulky. Further, it is possible to use smaller components because of the high frequency coupling. Therefore, the size of the emergency luminaire may be reduced. The electrical supply circuit may also be referred to as electrical power supply circuit. The electrical energy storage may be a part of the electrical supply circuit or electrically connected thereto. The electrical coupling means of the power supply device may be a part of the electrical supply circuit or electrically connected thereto. In particular, the electrical supply circuit may be configured for providing electrical power to a light source of the emergency luminaire from at least the electrical energy storage.

The electrical supply circuit may comprise or correspond to at least one converter configured for electrically supplying the emergency luminaire in order to enable light emission by the emergency luminaire. The at least one converter may be configured for power conversion. In particular, the at least one converter may be configured to convert a first voltage or current to a second voltage or current, wherein the second voltage respectively current is greater or smaller than the first voltage respectively current depending on the type of converter. Examples of converters comprise actively controlled converters that are controllable by control means, such as boost converters, buck converters, flyback converters, resonant converters or any other known converter types. The at least one converter may comprise or correspond to at least one AC/DC converter and/or at least one DC/DC converter. In addition or alternatively, the at least one converter may comprise or correspond to at least on DC/AC converter and/or at least one AC/AC converter. The electrical supply circuit optionally may comprise one or more filters (e.g. low pass filters, electromagnetic interference (EMI) filters etc.), one or more rectifier circuits (e.g. half-bridge rectifiers, full-bridge rectifier, etc.) and/or one or more power factor correction (PFC) circuits (e.g. active PFC circuits, passive PFC circuits etc.).

Optional, the power supply device may comprise a wireless power transfer means for wireless power transfer via the electrical coupling means of the power supply device. The wireless power transfer means may be part of the electrical supply circuit or may be electrically connected thereto. The wireless power transfer means may be controllable by control means for controlling wireless power transfer via the electrical coupling means of the power supply device. The wireless power transfer means may comprise or correspond to at least one DC/AC converter (e.g. a resonant DC/AC converter) and/or at least one resonant circuit (e.g. LC circuit respectively resonant tank) for generating a power transfer signal (wireless power signal) to be wirelessly transmitted via the electrical coupling means in order to achieve wireless power transfer. The electrical coupling means may be electrically connected to the wireless power transfer means. Optionally, the wireless power transfer means may be part of the electrical coupling means.

The power supply device may comprise control means configured to control light emission of the emergency luminaire by controlling the wireless supply of electrical power from the power supply device to the emergency luminaire.

Thus, the emergency luminaire does not need to comprise control means, which allows reducing costs and size of implementing the emergency luminaire. In addition, the need for service of the emergency luminaire is reduced, in case the emergency luminaire does not comprise the control means for light emission control and the electrical energy storage for electrical energy supply of the emergency luminaire. Namely, a failure of one of these components does not result in a need of service of the emergency luminaire. Either the power supply device is to be repaired or the power supply device is to be replace by a functional one.

The control means may comprise or correspond to a processor, microprocessor, controller, microcontroller, field programmable gate array (FPGA), application specific integrated circuit (ASIC) or any combination thereof.

The control means may be configured to control the light emission of the light source by controlling the electrical power wirelessly supplied via the electrical coupling means of the power supply device to electrical coupling means of the emergency luminaire. The greater the amount of electrical power wirelessly supplied to the emergency luminaire, in particular the light source of the emergency luminaire, the greater may be the light intensity of the light emitted by the emergency luminaire and vice versa. Thus, the greater the current wirelessly supplied to the light source of the emergency luminaire the greater the light intensity of the light emitted by the light source may be and vice versa. In particular, the control means may be configured to control the light emission of the emergency luminaire by controlling the electrical supply circuit of the power supply device for electrically supplying the emergency luminaire via the wireless transfer of electrical power from the electrical coupling means of the power supply device to the electrical coupling means of the emergency luminaire.

The control means may be a part of the electrical supply circuit or may be electrically connected thereto. The control means and the electrical supply circuit may be part of or form an operating module respectively ballast for operating lighting means, such as one or more LEDs. In this case, the operating module is configured to wirelessly transfer electrical power from the electrical coupling means of the power supply device to the electrical coupling means of the emergency luminaire in order to wirelessly supply the emergency luminaire with electrical power.

The power supply device may be configured for being electrically connected to mains. The control means may be configured to control the power supply device such that in case of a normal operation state the power supply device wirelessly supplies via its electrical coupling means electrical power from mains to the electrical coupling means of the emergency luminaire, when the power supply device is electrically connected to mains. Further, the control means may be configured to control the power supply device such that in case of an emergency operation state the power supply device wirelessly supplies via its electrical coupling means electrical power from the electrical energy storage to the electrical coupling means of the emergency luminaire.

As outlined already above, the emergency operation state corresponds to a state during which the electrical energy supply from mains malfunctions or fails, when the power supply device is connected to mains. This may be due to an emergency situation. For example in case of a fire in a building the electrical energy supply from mains may fail in a part of the building or the whole building, in which the power supply device may be installed for wirelessly supplying electrical power to the emergency luminaire. Another example of an emergency situation is mains failure (e.g. due to bad weather or a power station stops to provide electrical energy). The normal operation state corresponds to a state during which mains electrical supplies the power supply device, i.e. during which there is no malfunction or failure of the electrical energy supply from mains. Thus, the power supply device and the emergency luminaire may either be in the normal operation state (i.e. electrical energy is supplied from mains) or in the emergency operation state (i.e. sufficient electrical energy for the operation of the emergency luminaire cannot be supplied from mains).

In particular, the electrical supply circuit is configured to receive electrical power from mains when the power supply device is connected to mains. The control means may be configured to control the electrical supply circuit such that the electrical supply circuit wirelessly supplies, via the electrical coupling means of the power supply device, electrical power to the electrical coupling means of the emergency luminaire from mains in case the normal operation state is present and from the electrical energy storage in case the emergency operation state is present.

The control means may be configured to determine, based on a state of mains, whether the normal operation state or the emergency operation state is present, when the power supply device is electrically connected to mains.

In particular, the control means may be configured to determine whether the emergency operation state or the normal operation state is present by determining whether the electrical energy supply from mains to the power supply device functions or not (when the power supply device is electrically connected to mains). For example, the control means may determine that the electrical energy supply from mains functions in case the electrical energy, voltage and/or current supplied from mains are equal to or greater than a corresponding threshold value.

The control means may be configured to communicate with extern (i.e. with external components outside the emergency luminaire). This communication may be wire-bound and/or wireless. For this, the power supply device may comprise a communication interface. The control means may be configured to control, based on information received from extern, the wireless supply of electrical power from the power supply device to the emergency luminaire. For example, the control means may be configured to determine based on information received from extern whether the normal operation state or the emergency operations state is present.

Optionally, the electrical energy storage is rechargeable and the power supply device comprises a charging circuit for charging the electrical energy storage. The control means may be configured to control the charging circuit to charge the electrical energy storage with electrical power from mains in case the normal operation state is present. Optionally, the charging circuit is part of the electrical supply circuit of the power supply device.

The charging circuit may comprise or correspond to at least one converter, such as at least one AC/DC converter and/or at least one DC/DC converter. The charging circuit is not limited thereto and, thus, may be implemented in any known way.

Optionally, the control means is configured to transmit information to the emergency luminaire by modulating a power transfer signal wirelessly transferred from the electrical coupling means of the power supply device to the electrical coupling means of the emergency luminaire when electrical power is wirelessly transferred between the electrical coupling means of the power supply device and the electrical coupling means of the emergency luminaire.

In other words, the control means may be configured to communicate with the emergency luminaire via the wireless transfer of electrical power between the electrical coupling means of the power supply device and the electrical coupling means of the emergency luminaire. The information may comprise or correspond to one or more instructions and/or one or more reference values, such as a value of an operation current to be supplied to the light source of the emergency lighting, a dimming level value of the light emission, any other light parameter, etc. That is, the information may comprise or correspond to information for adjusting parameters (e.g. desired current to be supplied to the light source of the emergency luminaire) and/or setting a dimming level. In case the emergency luminaire is an emergency sign luminaire displaying at least one emergency sign, the information may be used to adapt the at least one emergency sign. For example, in case the at least one emergency sing is an escape route sign comprising an arrow indicating the direction of the escape route, the information may be used to adapt the direction of the arrow.

In particular, the control means may be configured to transmit information to the emergency luminaire by controlling the electrical supply circuit such that the information is modulated on the power transfer signal that is wirelessly transferred from the electrical coupling means of the power supply device to the electrical coupling means of the emergency luminaire when electrical power is wirelessly transferred between the electrical coupling means of the power supply device and the electrical coupling means of the emergency luminaire.

The control means may be configured to receive information from the emergency luminaire by demodulating a power transfer signal that is wirelessly received by the electrical coupling means of the power supply device when electrical power is transferred between the electrical coupling means of the power supply device and the electrical coupling means of the emergency luminaire.

Optionally, the control means may be configured to control the light emission of the emergency luminaire such that in case the normal operation state is present, no light is emitted by the emergency luminaire. This may be achieved by controlling the power supply device to not wirelessly transfer electrical power to the electrical coupling means of the emergency luminaire. Further, the control means may be configured to control the light emission of the emergency luminaire such that in case the emergency operation is present, light is emitted by the emergency luminaire for providing an emergency lighting to the environment. In other words, the control means may control the light emission of the emergency luminaire such that the emergency luminaire only transmits light in the emergency operation state.

Alternatively or additionally, the control means may be configured to control the light emission of the emergency luminaire such that in case the normal operation state is present, light having a first light intensity is emitted by the emergency luminaire. This may be achieved by controlling the power supply device to wirelessly transfer a first amount of electrical power to the electrical coupling means of the emergency luminaire. Further, the control means may be configured to control the light emission of the emergency luminaire such that in case the emergency operation is present, light having a second light intensity is emitted by the emergency luminaire. This may be achieved by controlling the power supply device to wirelessly transfer a second amount of electrical power to the electrical coupling means of the emergency luminaire. The first light intensity may be greater than the second light intensity. Thus, the first amount of electrical power may be greater than the second amount of electrical power. The light of the first light intensity in particular may correspond to undimmed light that may be emitted by the light source of the emergency luminaire. The light of the second light intensity in particular may correspond to light that is dimmed more compared to the light of the first light intensity. Therefore, the emergency luminaire may be used both for normal lighting (in the normal operation state) and emergency lighting (in the emergency operation state). Reducing the amount of electrical power and, thus, dimming the light of the emergency luminaire in the emergency state, increases the time for which the power supply device may wirelessly transfer electrical power to the emergency luminaire from the electrical energy storage in the emergency operation state.

In case the emergency luminaire comprises control means for controlling the light emission of the emergency luminaire, the control means of the power supply device may be configured to wirelessly transmit, via the electrical coupling means of the power supply device, information to the control means of the emergency luminaire for controlling the light emission of the emergency luminaire. The information may comprise or correspond to one or more instructions and/or one or more reference values, such as a value of an operation current to be supplied to the light source of the emergency lighting, a dimming level value of the light emission, any other light parameter, etc. That is, the information may comprise or correspond to information for adjusting parameters (e.g. desired current to be supplied to the light source of the emergency luminaire) and/or setting a dimming level. The greater the dimming level of the light emitted by the light source of the emergency luminaire the greater the amount of light respectively the greater the light intensity emitted by the light source. The dimming level may be between zero percent (o%) and one hundred percent (100%), wherein in case of a dimming level of 0% no light is emitted by the light source and in case of a dimming level of 100% light having a maximum light intensity of the light source is emitted.

The electrical coupling means of the power supply device may comprise or correspond to at least one conductor loop for a wireless power transfer. The electrical coupling means of the power supply device optionally comprises or corresponds to at least one coil. In particular, the at least one conductor loop (optional at least one coil) may be configured to be magnetically coupled with the electrical coupling means of the emergency luminaire. In other words, the at least one conductor loop (optional at least one coil) maybe configured for a magnetic coupling, optional high frequency magnetic coupling. That is, the at least one conductor loop may be at least one magnetic coupling conductor loop respectively the at least one coil may be at least one magnetic coupling coil. The electrical coupling means of the power supply device may comprise or correspond to a magnetic coil system respectively arrangement. The at least one conductor loop (optional at least one coil) may be configured to be coupled to the electrical coupling means of the emergency luminaire by electromagnetic induction.

The electrical coupling means of the emergency luminaire may comprise or correspond to at least one conductor loop for a wireless power transfer. The electrical coupling means of the emergency luminaire optionally comprises or corresponds to at least one coil for a wireless power transfer. In particular, the at least one conductor loop (optional at least one coil) of the emergency luminaire may be configured to be magnetically coupled with the electrical coupling means of the power supply device. In other words, the at least one conductor loop (optional at least one coil) of the emergency luminaire may be configured for a magnetic coupling, optional high frequency magnetic coupling. That is, the at least one conductor loop may be at least one magnetic coupling conductor loop respectively the at least one coil may be at least one magnetic coupling coil. The electrical coupling means of the emergency luminaire may comprise or correspond to a magnetic coil system respectively arrangement. The at least one conductor loop (optional at least one coil) of the emergency luminaire may be configured to be coupled to the electrical coupling means of the power supply device by electromagnetic induction.

The electrical coupling means may be embedded in the power supply device. That is, the electrical coupling means may be integrated in the power supply device. In addition or alternatively, the electrical coupling means may be at least partly arranged on a surface of the power supply device. Optionally, the electrical coupling means may be arranged on a surface of the power supply device.

The power supply device may be configured to be attached to the emergency luminaire such that the electrical coupling means of the power supply device is configured for a wireless transfer of electrical power to the electrical coupling means of the emergency luminaire, when the power supply device is attached to the emergency luminaire. Optionally, the power supply device is configured to be detachably attached to the emergency luminaire such that the electrical coupling means of the power supply device is configured for a wireless transfer of electrical power to the electrical coupling means of the emergency luminaire, when the power supply device is attached to the emergency luminaire.

The power supply device may be configured to be attached to the emergency luminaire such that the electrical coupling means of the power supply device is configured to be magnetically coupled to the electrical coupling means of the emergency luminaire, when the power supply device is attached to the emergency luminaire. In particular, the power supply device may be configured to be attached to the emergency luminaire such that the electrical coupling means of the power supply device is configured to be coupled to the electrical coupling means of the emergency luminaire by electromagnetic induction.

Optionally, the power supply device has a shape forming a cavity. The cavity is configured to receive a coupling part of the emergency luminaire such that the electrical coupling means of the power supply device is configured for a wireless transfer of electrical power to the electrical coupling means of the emergency luminaire, when the coupling part is arranged at least partly in the cavity of the power supply device. The coupling part may comprise or correspond to an extension part of the emergency luminaire. Optionally, the coupling part of the emergency luminaire is a coupling probe (in particular extension probe) of the emergency luminaire. The cavity may comprise or correspond to a recess of the power supply device, in particular a recess of a housing of the power supply device.

The coupling part of the emergency luminaire may comprise or correspond to a protrusion. The coupling part may comprise the electrical coupling means of the emergency luminaire. The electrical coupling means of the power supply device may be arranged at the cavity, in particular along the cavity of the power supply device. The shape of the coupling part of the emergency luminaire may fit to the shape of the cavity of the power supply device, such that the coupling part is configured to be arranged in the cavity. In particular, the coupling part of the emergency luminaire may fit to the shape of the power supply device respectively the shape of a housing of the power supply device. This may improve wireless power transfer. The coupling part of the emergency luminaire may be made of a material suitable for the wireless power transfer (that is allowing a wireless transfer of power). In particular, it may be made of a material that does not prevent or reduce the transmission of electromagnetic waves.

In particular, the cavity of the power supply device may be configured such that the coupling part of the emergency luminaire is removably arrangeable in the cavity. In other words, such that the coupling part of the emergency luminaire may be removably arranged in the cavity. The cavity of the power supply device may be configured for attaching (optional detachably attaching) the power supply device to the emergency luminaire by at least partly arranging the coupling part of the emergency luminaire in the cavity of the power supply device.

Optionally, the power supply device comprises a coupling part. The coupling part may comprise or correspond to an extension part of the power supply device. Optionally, the coupling part of the power supply device is a coupling probe (in particular extension probe) of the power supply device. The coupling part of the power supply device may be configured to be attached to the emergency luminaire, in particular a housing of the emergency luminaire, such that the electrical coupling means of the power supply device is configured for a wireless transfer of electrical power to the electrical coupling means of the emergency luminaire, when the coupling part is attached to the emergency luminaire. The coupling part of the power supply device may be configured to be detachably attached to the emergency luminaire. The coupling part of the power supply device may be made of a material suitable for the wireless power transfer (that is allowing a wireless transfer of power). In particular, it may be made of a material that does not prevent or reduce the transmission of electromagnetic waves.

The coupling part of the power supply device may be configured to be at least partly arranged in a cavity of the emergency luminaire, in particular of a housing of the emergency luminaire, such that the electrical coupling means of the power supply device is configured for a wireless transfer of electrical power to the electrical coupling means of the emergency luminaire, when the coupling part is at least partly arranged in the cavity of the emergency luminaire. The cavity may comprise or correspond to a recess of the emergency luminaire, in particular a recess of a housing of the emergency luminaire. The coupling part of the power supply device may comprise or correspond to a protrusion. The coupling part of the power supply device may comprise the electrical coupling means of the power supply device. The electrical coupling means of the emergency luminaire may be arranged at the cavity, in particular along the cavity of the emergency luminaire. The shape of the coupling part of the power supply device may fit to the shape of the cavity of the emergency luminaire, such that the coupling part is configured to be arranged in the cavity. In particular, the coupling part of the power supply device may fit to the shape of the emergency luminaire respectively the shape of a housing of the emergency luminaire. This may improve wireless power transfer.

The cavity of the emergency luminaire may be configured such that the coupling part of the power supply device is removably arrangeable in the cavity. In other words, such that the coupling part of the power supply device may be removably arranged in the cavity. The cavity of the emergency luminaire may be configured for attaching (optional detachably attaching) the power supply device to the emergency luminaire by at least partly arranging the coupling part of the power supply device in the cavity of the emergency luminaire.

The electrical energy storage may be removably arranged in the power supply device. In other words the electrical energy storage of the power supply device may be arranged such that the electrical energy storage is accessible for service and/or is replaceable. That is, the power supply device may be configured such that the electrical energy storage of the power supply device is accessible for service and/or is replaceable.

The electrical energy storage may be removably arranged in the power supply device and the other electrical components of the power supply device may be sealed in a housing of the power supply device. This allows exchanging the electrical energy storage in case the electrical energy storage malfunctions, fails or the lifetime of the electrical energy storage is less than a threshold value for the lifetime, while the other electrical components are protected against environmental influences (e.g. water, dust) by the housing. Alternatively, the electrical energy storage and the other electrical components of the power supply device may be sealed in a housing of the power supply device.

Optionally, the electrical energy storage may be removably arranged in the power supply device and all other electrical components of the power supply device, except of at least one of them, may be sealed in a housing of the power supply device. Alternatively, the electrical energy storage and all other electrical components of the power supply device, except of at least one of them, may be sealed in a housing of the power supply device. For sealing, the respective elements may be casted respectively molded. The sealing may be achieved by ultrasonic welding of a plastic housing. The housing may be a plastic housing.

The housing of the power supply device may be adapted to provide a protection for the components enclosed by the housing against environmental influences, such as dust and water. The housing may be a housing according to the IP standard (International Protection/Ingress Protection standard, IEC standard 60529) respectively IP code. The IP code comprises two digits, wherein the first digit indicates the degree of solid particle protection and the second digit indicates the degree of liquid ingress protection. Optionally, the housing may be an IP40 housing, i.e. a housing providing IP40 protection for the components enclosed by the housing. Alternatively, the housing may be an IP67 housing, i.e. a housing providing IP67 protection for the components enclosed by the housing.

The power supply device may be configured to wirelessly supply different types of emergency luminaires with electrical power. In particular, the power supply device may be configured to wirelessly supply emergency luminaires with interchangeable optics and luminaire format.

In order to achieve the power supply device according to the invention, some or all of the above described optional features may be combined with each other.

According to the invention, the emergency luminaire comprises electrical coupling means for a wireless power transfer and a light source configured to be electrically supplied from the electrical coupling means. The emergency luminaire is configured to be wirelessly supplied with electrical power from an electrical energy storage of a power supply device via a wireless transfer of the electrical power to the electrical coupling means from electrical coupling means of the power supply device.

An emergency luminaire comprising an emergency sign element (e.g. an exit sign element or escape route sign element) that is lighted respectively illuminated by the light source of the emergency luminaire or displayed by the light source may be referred to as emergency sign luminaire (e.g. exit sign luminaire or escape route sign luminaire). The emergency sign element may comprise at least one emergency sign, e.g. at least one exit sign and/or at least one escape route sign. The emergency luminaire may be an emergency sign luminaire. It is to be noted that the above mentioned types of emergency luminaires are examples and that other types of emergency luminaires make use the same principle.

The light source may be referred to as electrical light source. The light emission of the light source may be controllable by the amount of electrical power supplied to the light source. The light source of the emergency luminaire may comprise or correspond to one or more light emitting diodes (LEDs). The one or more LEDs may correspond to one or more organic LEDs, one or more inorganic LEDs and/or one or more other LEDs known in the art. The light source, in particular the one or more LEDs, may be configured to emit colored light, optionally light of at least two colors, or a light of a single color (white).

The emergency luminaire may comprise at least one converter electrically connected to the electrical coupling means for receiving the electrical power from the electrical coupling means. The at least one converter may be at least one AC/DC converter. The at least one converter is configured to set the electrical power, in particular the current, provided to the light source of the emergency luminaire. Optionally, the emergency luminaire may comprise a currents source, electrically connected to the electrical coupling means, for providing, based on the electrical power wirelessly received by the electrical coupling means, a current to the light source. The current source may correspond to the at least one converter.

Optionally, the emergency luminaire comprises control means configured to control light emission of the light source by controlling the electrical power supplied from the electrical coupling means to the light source.

The control means may comprise or correspond to a processor, microprocessor, controller, microcontroller, field programmable gate array (FPGA), application specific integrated circuit (ASIC) or any combination thereof.

Optionally, the optional control means of the emergency luminaire may be configured to control the light emission of the light source by controlling the at least one converter respectively optional current source. By setting the electrical power, in particular current, provided to the light source the light emission of the light source may be set respectively controlled.

The control means may be configured to communicate with extern (i.e. with external components outside the emergency luminaire). This communication may be wire-bound and/or wireless. For this, the emergency luminaire may comprise a communication interface. For example, the control means may be configured to communicate to the extern (e.g. the power supply device) information, such as a default state.

The control means may be configured to receive information from the power supply device by demodulating a power transfer signal that is wirelessly received by the electrical coupling means of the emergency luminaire when electrical power is transferred between the electrical coupling means of the emergency luminaire and the electrical coupling means of the power supply device. Further, the control means may be configured to control the light source based on the received information.

Optionally, the control means is configured to transmit information to the power supply device by modulating a power transfer signal wirelessly transferred from the electrical coupling means of the emergency luminaire to the electrical coupling means of the power supply device when electrical power is wirelessly transferred between the electrical coupling means of the emergency luminaire and the electrical coupling means of the power supply device.

Optionally, the emergency luminaire may comprise wireless power transfer means for achieving a wireless power transfer by the electrical coupling means of the emergency luminaire. The description with regard to the wireless power transfer means of the power supply device is correspondingly valid for the optional wireless power transfer means of the emergency luminaire.

The emergency luminaire may comprise a coupling part. The coupling part is configured to be arranged in a cavity of the power supply device such that the electrical coupling means of the emergency luminaire is configured to wirelessly receive electrical power from the electrical coupling means of the power supply device, when the coupling part is at least partly arranged in the cavity of the power supply device. The coupling part may comprise or correspond to an extension part respectively protrusion of the emergency luminaire. The coupling part may be a coupling probe (in particular extension probe). The coupling part of the emergency luminaire may be configured to be attached to the power supply device, in particular a housing of the power supply device, such that the electrical coupling means the emergency luminaire is configured for a wireless transfer of electrical power from the electrical coupling means of the power supply device, when the coupling part is attached to the power supply device. The coupling part of the emergency luminaire may be configured to be detachably attached to the power supply device.

The light source and the electrical coupling means may be sealed in a housing of the emergency luminaire. Optionally, the light source, the electrical coupling means and the optional control means are sealed in a housing of the emergency luminaire. In addition, the at least one optional converter and/or optional current source may be sealed in the housing of the emergency luminaire. Thus, in case the emergency luminaire does not comprise the control means; the light source and the electrical coupling means may be sealed in the housing of the emergency luminaire. In addition, the optional converter and/or optional current source for providing, based on the electrical power received by the electrical coupling means, electrical power (in particular a current) to the light source may be sealed in the housing of the emergency luminaire. The sealing may be achieved by ultrasonic welding of a plastic housing. The housing of the emergency luminaire may be a plastic housing.

This allows protecting the light source, the electrical coupling means and optionally the optional control means, the at least one optional converter and/or optional current source against environmental influences (e.g. water, dust) by the housing. Further, this allows sealing electrical components that do not need to be serviced, such as the light source (e.g. one or more LEDs), the electrical coupling means (at least one conductor loop or at least one coil), a converter and/or current source.

The housing of the emergency luminaire may be adapted to provide a protection for the components enclosed by the housing against environmental influences, such as dust and water. The housing may be a housing according to the IP standard (International Protection/Ingress Protection standard, IEC standard 60529) respectively IP code. Optionally, the housing may be an IP40 housing, i.e. a housing providing IP40 protection for the components enclosed by the housing. Alternatively, the housing may be an IP67 housing, i.e. a housing providing IP67 protection for the components enclosed by the housing. The protection classes mentioned above are to be understood as examples and other protection classes may be used, too.

The emergency luminaire may correspond to a panel, optionally an emergency sign panel. In case, the emergency luminaire corresponds to an emergency sign panel, the emergency luminaire may comprise an emergency sign element displaying at least one emergency sign (e.g. at least one exit sign and/or at least one escape route sign).

Optionally, the emergency luminaire comprises an emergency sign element displaying at least one emergency sign. The emergency sign element is arranged such that light emitted by the light source lights the at least one emergency sign.

The emergency sign element may be at least partly translucent. The emergency sign element may comprise or be made of translucent material (e.g. glass, acrylic glass etc.). The emergency sign element may comprise respectively display at least one emergency sign on at least one surface of the emergency sign element. The at least one emergency sign may comprise or correspond to a pictogram. The at least one emergency sign may be an exit sign for indicating an exit and/or an escape route sign for indicating an escape route.

The emergency sign element may be arranged such that the light emitted by the light source of the emergency luminaire lights the emergency sign of the at least one surface of the emergency sign element. In particular, the emergency sign element may be attached to a housing of the emergency luminaire. The housing may accommodate the light source and the electrical coupling means and optionally the optional control means, the at least one optional converter and/or the optional current source of the emergency luminaire. In particular the housing may accommodate the light source such that the light source lights the emergency sign element, in particular the at least one emergency sign, when the emergency sign element is attached to the housing of the emergency luminaire.

The emergency sign element may comprise or correspond to a light guide, wherein the emergency sign element may be arranged such that light emitted by the light source of the emergency luminaire is emitted through the light guide. The light emitted through the light guide lights the at least one emergency sign of the at least one surface of the emergency sign element.

The emergency sign element may comprise or correspond to a plate with at least one emergency sign on at least one surface of the plate. The plate may be at least partly translucent, such that light emitted by the light source of the emergency luminaire is emitted through the plate. In particular, the light emitted through the plate lights the emergency sign of the at least one surface of the plate. The plate may be a light guide plate.

The light source of the emergency luminaire may comprise or correspond to a plurality of light emitting diodes (LEDs) configured to display information. Optionally, the plurality of LEDs are configured to display at least one emergency sign. The control means may be configured to control the displayed information by controlling the plurality of light emitting diodes based on the received information.

For example, the emergency luminaire may wirelessly receive information from the power supply device indicting to adapt the information (e.g. the at last one emergency sign) displayed by the plurality of LEDs. The control means may be configured to control the LEDs such that the displayed information is adapted according to the received information (wirelessly received from the power supply device). For example, in case an escape route sign is displayed with an arrow pointing into the direction of escape, the information received by the emergency luminaire may indicate to change the direction of escape to a new one. Thus, the control means of the emergency luminaire may be configured to adapt the displayed arrow such that it points into the new direction of escape indicated by the received information.

The plurality of LEDs may form or be part of a display of the emergency luminaire for displaying information. In particular, the plurality of LEDs may form or be part of a LED panel for displaying information. The information may comprise or correspond to at least one emergency sign. In this case, the emergency luminaire may correspond to an emergency sign luminaire. The plurality of LEDs may form a LED blade.

Optionally the plurality of light emitting diodes may be arranged such that they are configured to display information on an emergency sign element of the emergency luminaire. The emergency sign element may be an at least partly translucent plate with at least one emergency sign on at least one surface of the plate.

Some or all of the above described optional features may be combined with each other.

In the following, the invention is described exemplarily with reference to the enclosed figures, in which
- **Figure 1**: is a schematic view of a power supply device and an emergency luminaire according to an embodiment of the invention;
- **Figure 2**: is a schematic view of a power supply device and an emergency luminaire according to an embodiment of the invention;
- **Figure 3**: schematically shows two examples of arranging electrical coupling means of a power supply device according to an embodiment of the invention;
- **Figure 4**: schematically shows two examples of attaching a power supply device and an emergency luminaire according to an embodiment of the invention to a wall; and
- **Figure 5**: schematically shows two examples of attaching a power supply device and an emergency luminaire according to an embodiment of the invention to a wall.

In the figures, corresponding elements have the same reference signs. The proportions and dimensions of the elements shown in the figures do not represent the power supply device and the emergency luminaire to scale, but are merely chosen to describe the structure and function of the power supply device and the emergency luminaire.

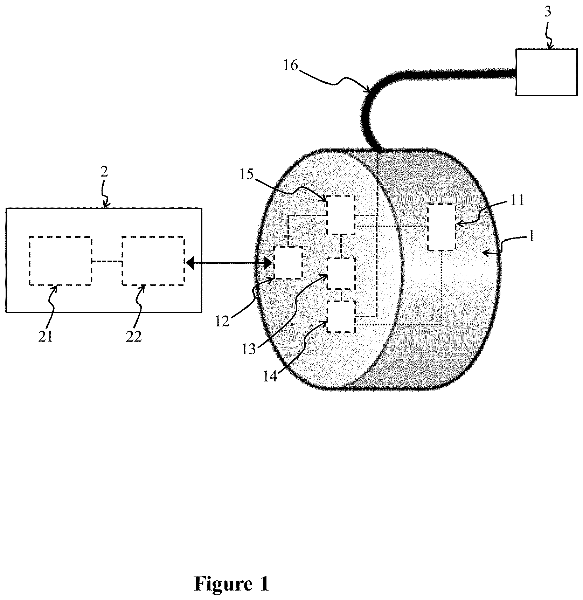

**Figure 1** is a schematic view of a power supply device and an emergency luminaire according to an embodiment of the invention.

The power supply device 1 is an example of the power supply device according to the first aspect of the invention. The emergency luminaire 2 is an example of the emergency luminaire according to the second aspect of the invention. The power supply device 1 and the emergency luminaire 2 form an emergency lighting system.

The emergency luminaire 2 comprises electrical coupling means 22 for a wireless power transfer and a light source 21 configured to be electrically supplied from the electrical coupling means 22. Optionally, the emergency luminaire 2 comprises control means configured to control light emission of the light source 21 by controlling the electrical power supplied from the electrical coupling means 22 to the light source 21 (not shown in Figure 1). Additionally or alternatively, the emergency luminaire may comprise at least one converter (e.g. at least one AC/DC converter) and/or at least one current source electrically connected to the electrical coupling means for receiving the electrical power from the electrical coupling means (not shown in Figure 1). The at least one converter and/or current source is configured to set the electrical power, in particular the current, provided to the light source 21 of the emergency luminaire 2. Optionally, the optional control means may be configured to control light emission of the light source 21 by controlling the at least one converter and/or the at least one current source.

The power supply device 1 comprises electrical coupling means 12 for a wireless power transfer, and an electrical energy storage 13. The power supply device 1 is configured to wirelessly supply electrical power from the electrical energy storage 13 of the power supply device 1 to the emergency luminaire 2, via a wireless transfer of the electrical power from the electrical coupling means 12 of the power supply device 1 to the electrical coupling means 22 of the emergency luminaire 2.

The electrical coupling means 12 of the power supply device 1 and the electrical coupling means 22 of the emergency luminaire 2 may be configured to be magnetically coupled to each other for a wireless power transfer. In other words, these two electrical coupling means 12, 22 may form a magnetic coupling system, preferably a high frequency magnetic coupling system. In particular, the electrical coupling means 12 of the power supply device 1 may be configured to transfer electrical power to the electrical coupling means 22 of the emergency luminaire 2 via electromagnetic induction. The electrical coupling means 12 of the power supply device 1 and the electrical coupling means 22 of the emergency luminaire 22 may be adapted for a high frequency power transfer between them.

Further, the power supply device 1 may comprises an electrical supply circuit 15 for the emergency luminaire 2 configured for supplying electrical power to the emergency luminaire 2 via a wireless transfer of the electrical power from the electrical coupling means 12 of the power supply device 1 to electrical coupling means 22 of the emergency luminaire 2.

Furthermore, the power supply device 1 may comprise control means 11 configured to control light emission of the emergency luminaire 2 by controlling the wireless supply of electrical power from the power supply device 1 to the emergency luminaire 2. In particular, the control means 11 may be configured to control the light emission of the emergency luminaire 2 by controlling the electrical supply circuit 15 of the power supply device 1.

The power supply device 1 may be configured for being electrically connected to mains 3. The electrical connection to mains 3 may be via at least one wire 16 which may be part of the power supply device 1 or may be electrically connected to a terminal of the power supply device 1. The power supply device 1, in particular the electrical supply circuit 15, may be configured to wireless supply electrical power from the electrical energy storage 13 and optionally mains 3, when the power supply device 1 is connected to mains 3. Optionally, the electrical energy storage 13 is rechargeable and the power supply device 1 comprises a charging circuit 14 for charging the electrical energy storage 13.

The power supply device 1 may comprise an optional wireless power transfer means (not shown in Figure 1) for wireless power transfer via the electrical coupling means 12 of the power supply device 1. The wireless power transfer means may be part of the electrical supply circuit 15. The control means 11 may be configured to control the wireless power transfer means for controlling wireless power transfer via the electrical coupling means 12. The wireless power transfer means may comprise or correspond to at least one DC/AC converter (e.g. a resonant DC/AC converter) and/or at least one resonant circuit (e.g. LC circuit respectively resonant tank) for generating a power transfer signal (wireless power signal) to be wirelessly transmitted via the electrical coupling means 12 in order to achieve wireless power transfer. The electrical coupling means 12 may be electrically connected to the wireless power transfer means. Optionally, the wireless power transfer means may be part of the electrical coupling means 12. The wireless power transfer means is only optional. According to an embodiment, the function of the wireless power transfer means may be provided by another circuit of the power supply device 1, in particular of the electrical supply circuit 15.

As shown in Figure 1, all the electrical components (including the electrical energy storage 13) for electrically supplying the emergency luminaire 2, in particular its light source 21, may be removed from the emergency luminaire 2 and comprised by the power supply device 1. As a result, the emergency luminaire may be installed in an environment that is unsuitable for the electrical energy storage. In addition, the lifetime of the electrical energy storage may be increased because it is isolated respectively separated from the heat generated by the light source 21 of the emergency luminaire. Furthermore, the size of the emergency luminaire may be reduced as a result of removing the electrical energy storage 13 and other electrical components from the emergency luminaire 2. Since the power transfer from the power supply device 1 to the emergency luminaire 2 is wireless, an IP protection of the components of the emergency luminaire 2, such as the light source 21 and the electrical coupling means 22, may be easily achieved by arranging them in a housing. The components may be sealed inside the housing because there is no need of accessing the inside of the housing for servicing an electrical energy storage.

For further information on the features and function of the power supply device 1 and the emergency luminaire 2 of Figure 1, in particular the wireless transfer of electrical power from the power supply device 1 to the emergency luminaire 2,reference is made to the above description of the power supply device according to the first aspect of the invention and the above description of the emergency luminaire according to the second aspect of the invention.

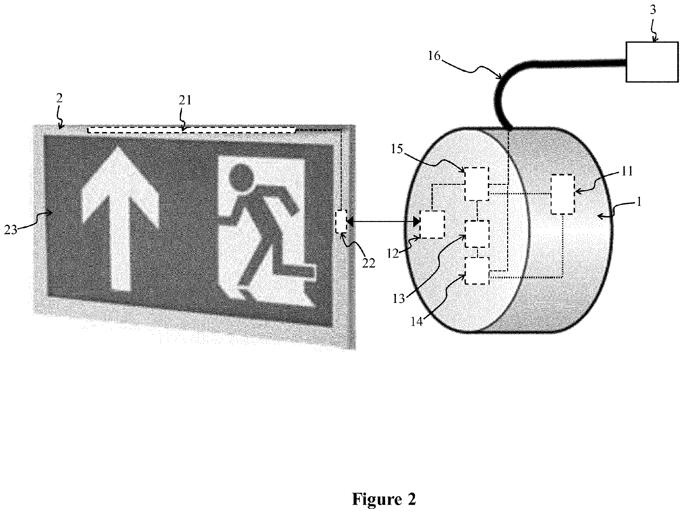

**Figure 2** is a schematic view of a power supply device and an emergency luminaire according to an embodiment of the invention. The emergency luminaire 2 and power supply device 1 of Figure 2 correspond to the emergency luminaire 2 and power supply device 1 of Figure 1 and, thus, the above description of Figure 1 is correspondingly valid for the emergency luminaire 2 and power supply device 1 of Figure 2. In the following mainly additional features with respect to Figure 1 are described.

As shown in Figure 2, the emergency luminaire 2 comprises an emergency sign element 23 comprising respectively displaying at least one emergency sign. According to Figure 2, the at least one emergency sign is exemplarily an escape route sign. This is only by way of example and may be any other emergency sign. The emergency luminaire 2 of the illustrated example Figure 2 is an emergency sign luminaire. Other examples for an emergency luminaire may have no sign such as a bulkhead luminaire in a stairwell.

As indicated in Figure 2, the light source 21 may be arranged 21 on one side of the emergency luminaire 2 (e.g. the top side) such that the light emitted by the light source 21 lights the emergency sign element 23, in particular the at least one emergency sign. Alternatively or additionally, the light source 21 may be arranged behind the emergency sign element 23 for lighting it from behind. The emergency sign element 23 may be at least partly translucent so that the light emitted by the light source 21 lights the at least one emergency sign that may be arranged on at least one surface of the emergency sign element 23.

The light source 21 may be configured to display information, such as at least one emergency sign. Optionally, the light source 21 may be configured to display information on the emergency sign element 23. The emergency sign element 23 may be a plate with at least one emergency sign on at least one surface of the plate, wherein the plate may be at least partly translucent.

The light source 21 may comprise or correspond to a plurality of light emitting diodes (LEDs). The plurality of LEDs may form or be part of a display of the emergency luminaire 2 for displaying information (not shown in Figure 2). In particular, the plurality of LEDs may form or be part of a LED panel for displaying information. The information may comprise or correspond to at least one emergency sign. The plurality of LEDs may form a LED blade. The emergency luminaire 2 may correspond to an emergency sign panel.

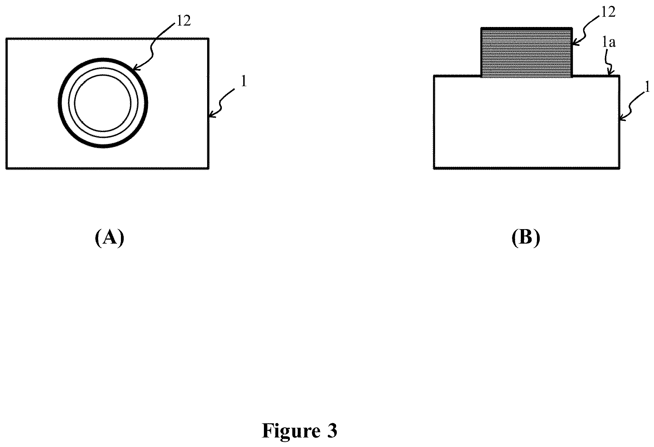

**Figure 3** schematically shows two examples of arranging electrical coupling means of a power supply device according to an embodiment of the invention. The power supply device 1 of Figure 3 correspond to the power supply device 1 of Figure 1 and, thus, the above description of Figures 1 and 2 is correspondingly valid for the power supply device 1 of Figure 3. In the following mainly additional features with respect to Figures 1 and 2 are described.

As shown in Figure 3 (A), the electrical coupling means 12 may be embedded in the power supply device 1. That is, the electrical coupling means 12 may be integrated in the power supply device 1. As shown in Figure 3 (B), the electrical coupling means 12 may be at least partly arranged on a surface 1a of the power supply device 1. Optionally, the electrical coupling means 12 may be arranged on a surface 1a of the power supply device 1.

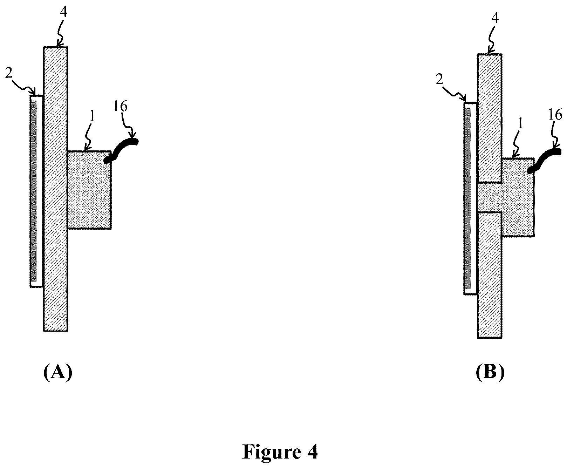

**Figure 4** schematically shows two examples of attaching a power supply device and an emergency luminaire according to an embodiment of the invention to a wall. The emergency luminaire 2 and power supply device 1 of Figure 4 correspond to the emergency luminaire 2 and power supply device 1 of Figure 1 and, thus, the above description of Figures 1, 2 and 3 is correspondingly valid for the emergency luminaire 2 and power supply device 1 of Figure 4. In the following mainly additional features with respect to Figure 4 are described.

As shown in Figure 4 (A) the emergency luminaire 2 and the power supply device 1 may be arranged on two different sides of a wall 4, wherein the power supply device 1 is configured to wirelessly transfer electrical power through the wall 4 to the emergency luminaire 2. For this the electrical coupling means 12 of the power supply device 1 may be magnetically coupled (through the wall 4) with the electrical coupling means 22 of the emergency luminaire 2 (not shown in Figure 4). In particular, the emergency luminaire 2 may be attached respectively mounted to the wall 4 on one side of the wall 4 and the power supply device 1 may be attached respectively mounted to the wall 4 on the other side of the wall 4.

As shown in Figure 4(B), the power supply device 1 may comprise a coupling part. The emergency luminaire 2 and the power supply device 1 may be arranged (in particular attached or mounted) on two different sides of the wall 4 such that the coupling part of the power supply device 1 is arranged in a throughput (respectively opening or hole) of the wall 4 and attached to the emergency luminaire 2 for the wireless transfer of electrical power. In particular, the coupling part may comprise the electrical coupling means 12 of the power supply device 1. The coupling part may be made of a material suitable for the wireless power transfer (that is allowing a wireless transfer of power). In particular, it may be made of a material that does not prevent or reduce the transmission of electromagnetic waves. The coupling part of the power supply device 1 may fit to the shape of the emergency luminaire 2 respectively the shape of a housing of the emergency luminaire 2. This may improve wireless power transfer. The coupling part of the power supply device 1 may reduce or overcome a damping effect of the wall 4 on the wireless power transfer.

The electrical coupling means 22 of the emergency luminaire 2 may be arranged (e.g. flush mounted) on a side of the emergency luminaire 2 that is facing the wall 4, optionally being at least partly in contact with the wall 4, when the emergency luminaire 2 is attached to the wall 4 (not shown in Figure 4). This side of the emergency luminaire 2 may correspond to a backside of the emergency luminaire 2.

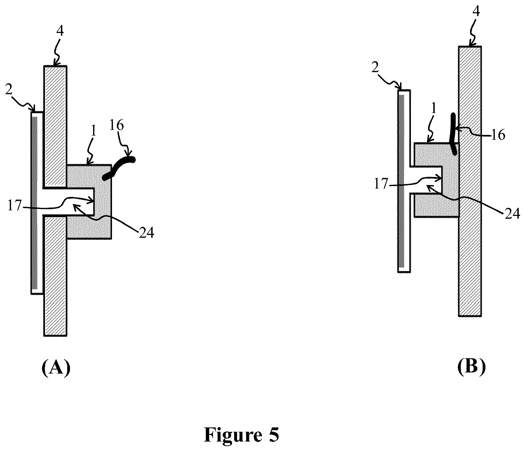

**Figure 5** schematically shows two examples of attaching a power supply device and an emergency luminaire according to an embodiment of the invention to a wall.

The emergency luminaire 2 and power supply device 1 of Figure 5 correspond to the emergency luminaire 2 and power supply device 1 of Figure 1 and, thus, the above description of Figures 1, 2 and 3 is correspondingly valid for the emergency luminaire 2 and power supply device 1 of Figure 5. In the following mainly additional features with respect to Figure 5 are described.

As shown in Figure 5, the power supply device 1 may have a shape forming a cavity 17. The cavity 17 is configured to receive a coupling part 24 of the emergency luminaire 2 such that the electrical coupling means 12 of the power supply device 1 is configured for a wireless transfer of electrical power to the electrical coupling means 22 of the emergency luminaire 2, when the coupling part 24 is arranged at least partly in the cavity 17 of the power supply device 1.

The coupling part 24 may comprise the electrical coupling means 22 of the emergency luminaire 2. The electrical coupling means 12 of the power supply device 1 may be arranged at the cavity 17, in particular along the cavity 17 of the power supply device 1. The shape of the coupling part 24 fits to the shape of the cavity 17, such that the coupling part 24 is configured to be arranged in the cavity 17. In particular, the coupling part 24 of the emergency luminaire 2 may fit to the shape of the power supply device 1 respectively the shape of a housing of the power supply device 1. The coupling part 24 may be made of a material suitable for the wireless power transfer (that is allowing a wireless transfer of power). In particular, it may be made of a material that does not prevent or reduce the transmission of electromagnetic waves.

As shown in Figure 5 (A), the emergency luminaire 2 and the power supply device 1 may be arranged (in particular attached or mounted) on two different sides of a wall 4 such that the coupling part 24 of the emergency luminaire 2 is arranged in a throughput (respectively opening or hole) of the wall 4 and the cavity 17 formed by the shape of the power supply device 1. The coupling part 24 of the emergency luminaire 2 may reduce or overcome a damping effect of the wall 4 on the wireless power transfer. Alternatively, as shown in Figure 5 (B), the emergency luminaire 2 and the power supply device 1 may be arranged on the same side of the wall 4. In this case, the power supply device 1 may be attached respectively mounted to the wall 4 and the emergency luminaire 1 may be attached to the power supply device 1 such that the coupling part 24 of the emergency luminaire 2 is arranged at least partly in the cavity 17 formed by the shape of the power supply device 1. Thus, the emergency luminaire 2 may be attached respectively mounted via the power supply device 1 to the wall 4.

The electrical coupling means 22 of the emergency luminaire 2 may be arranged (e.g. flush mounted) at a coupling part 24 (optionally being a coupling probe) of the emergency luminaire 2. The coupling part 24 may either pierce the wall 4 (e.g. a throughput of the wall 4), when the emergency luminaire 2 is attached to the wall 2 (cf. Figure 5 (A)) or sit inside a cavity 17 of the power supply device 1 for being attached to the wall 4 (e.g. for flush wall mounting).

The description of Figures 4 and 5 with respect to a wall is only by way of example. Thus, this description is correspondingly valid for a different barrier separating to areas, such as a ceiling of a room.

For further information on the features and function of the power supply device 1 of Figures 1 to 5 and the emergency luminaire 2 of Figures 1, 2, 4 and 5 reference is made to the above description of the power supply device according to the first aspect of the invention and the above description of the emergency luminaire according to the second aspect of the invention.

Thus, the present invention proposes to provide an emergency lighting system with two modules, wherein the light source (one or more LEDs) for providing lighting (e.g. emergency lighting and optional normal lighting) is comprised by a first module corresponding to the emergency luminaire described above. The components for electrically supplying the light source are arranged in a second module of the two modules, which corresponds to the power supply device described above. These components comprise or correspond at least to an electrical energy storage and optionally to a mains power conversion circuit and a charging circuit for the electrical energy storage. These components may be bulky and, thus, the emergency luminaire (first module) according to the invention may be smaller compared to ordinary emergency luminaires. In addition, the emergency luminaire may be sealed, because the light source (e.g. one or more LEDs) does not need to be serviced. The electrical energy storage that might need servicing or replacement is arranged in the second module and, thus, remote to the first module.

All steps which are performed by the various entities described in the present disclosure as well as the functionalities described to be performed by the various entities are intended to mean that the respective entity is adapted to or configured to perform the respective steps and functionalities. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. An emergency lighting system comprising
an emergency luminaire (2) and a power supply device (1) for a supply of electrical power to the emergency luminaire (2); wherein
the power supply device (1) comprises electrical coupling means (12) and an electrical energy storage (13); and
the power supply device (1) is configured to supply electrical power from the electrical energy storage (13) of the power supply device (1) to the emergency luminaire (2),
**characterized in that**
the electrical coupling means (12) of the power supply device (1) is configured to wirelessly transfer the power;
the emergency luminaire (2) comprises electrical coupling means (22) for wireless power transfer and a light source (21) configured to be electrically supplied from the electrical coupling means (22) of the emergency luminaire (2);
the power supply device (1) is configured to wirelessly supply the electrical power via a wireless transfer of the electrical power from the electrical coupling means (12) of the power supply device (1) to the electrical coupling means (22) of the emergency luminaire (2);
the emergency luminaire (2) is configured to be wirelessly supplied with electrical power from the electrical energy storage (13) of the power supply device (1) via said wireless transfer of the electrical power to the electrical coupling means (22) of the emergency luminaire (2) from electrical coupling means (12) of the power supply device (1); and
all electrical components for electrically supplying the emergency luminaire (2), including the electrical energy storage (13), are removed from the emergency luminaire (2) and comprised by the power supply device (1).

2. The emergency lighting system according to claim 1, wherein the power supply device (1) comprises control means (11) configured to control light emission of the emergency luminaire (2) by controlling the wireless supply of electrical power from the power supply device (1) to the emergency luminaire (2).

3. The emergency lighting system according to claim 2, wherein
- the power supply device (1) is configured for being electrically connected to mains (3); and
- the control means (11) of the power supply device (1) is configured to control the power supply device (1) such that
- in case of a normal operation state the power supply device (1) wirelessly supplies via the electrical coupling means (12) of the power supply device (1) electrical power from mains (3) to the electrical coupling means (22) of the emergency luminaire (2), when the power supply device (1) is electrically connected to mains (3); and
- in case of an emergency operation state the power supply device (1) wirelessly supplies via the electrical coupling means (12) of the power supply device (1) electrical power from the electrical energy storage (13) to the electrical coupling means (22) of the emergency luminaire (2).

4. The emergency lighting system according to claim 2 or 3, wherein
- the control means (11) of the power supply device (1) is configured to determine, based on a state of mains (3), whether the normal operation state or the emergency operation state is present, when the power supply device (1) is electrically connected to mains (3).

5. The emergency lighting system according to any one of claims 2 to 4, wherein
- the electrical energy storage (13) is rechargeable and the power supply device (1) comprises a charging circuit (14) for charging the electrical energy storage (13), and
- the control means (11) of the power supply device (1) is configured to control the charging circuit (14) to charge the electrical energy storage (13) with electrical power from mains (3) in case the normal operation state is present.

6. The emergency lighting system according to any one of claims 2 to 5, wherein
- the control means (11) of the power supply device (1) is configured to transmit information to the emergency luminaire (2) by modulating a power transfer signal wirelessly transferred from the electrical coupling means (12) of the power supply device (1) to the electrical coupling means (22) of the emergency luminaire (2) when electrical power is wirelessly transferred between the electrical coupling means (12) of the power supply device (12) and the electrical coupling means (22) of the emergency luminaire (2).

7. The emergency lighting system according to any one of the previous claims, wherein
- the electrical coupling means (12) comprises or corresponds to at least one conductor loop, optionally at least one coil, for a wireless power transfer.

8. The emergency lighting system according to any one of the previous claims, wherein
- the electrical coupling means (12) is embedded in the power supply device (1) and/or at least partly arranged on a surface (1a) of the power supply device (1).

9. The emergency lighting system according to any one of the previous claims, wherein the power supply device (1) is configured to be, optionally detachably, attached to the emergency luminaire (2) such that the electrical coupling means (12) of the power supply device (1) is configured for the wireless transfer of electrical power to the electrical coupling means (22) of the emergency luminaire (2), when the power supply device (1) is attached to the emergency luminaire (2).

10. The emergency lighting system according to any one of the previous claims, wherein the power supply device (1) has a shape forming a cavity (17), wherein
- the cavity (17) is configured to receive a coupling part (24), optionally coupling probe, of the emergency luminaire (2) such that the electrical coupling means (12) of the power supply device (1) is configured for a wireless transfer of electrical power to the electrical coupling means (22) of the emergency luminaire (2), when the coupling part (24) is arranged at least partly in the cavity (17) of the power supply device (1).

11. The emergency lighting system according to any one of the previous claims, wherein
- the electrical energy storage (13) is removably arranged in the power supply device (1) and the other electrical components of the power supply device (1) are sealed in a housing of the power supply device (1); or
- the electrical energy storage (13) and the other electrical components of the power supply device (1) are sealed in a housing of the power supply device (1).

12. The emergency lighting system according to any one of the previous claims, wherein the emergency luminaire (2) comprises control means configured to control light emission of the light source (21) by controlling the electrical power supplied from the electrical coupling means (22) to the light source (21).

13. The emergency lighting system according to claim 12, wherein the control means of the emergency luminaire (2) is configured to
- receive information from the power supply device (1) by demodulating a power transfer signal that is wirelessly received by the electrical coupling means (22) of the emergency luminaire (2) when electrical power is transferred between the electrical coupling means (22) of the emergency luminaire (2) and the electrical coupling means (12) of the power supply device (1), and
- control the light source (21) based on the received information.

14. The emergency lighting system according to any one of claims when depending on claim 10, wherein the emergency luminaire (2) comprises a coupling part (24), optionally a coupling probe, configured to be arranged in the cavity (17) of the power supply device (1) such that the electrical coupling means (22) of the emergency luminaire (2) is configured to wirelessly receive electrical power from the electrical coupling means (12) of the power supply device (1), when the coupling part (24) is at least partly arranged in the cavity (17) of the power supply device (1).

15. The emergency lighting system according to any one of the previous claims, wherein
- the light source (21), the electrical coupling means (22) of the emergency luminaire (2) and optional the control means of the emergency luminaire (2) are sealed in a housing of the emergency luminaire (2).

16. The emergency lighting system according to any one of the previous claims, wherein
- the emergency luminaire (2) comprises an emergency sign element displaying at least one emergency sign (23); and
- the emergency sign element (23) is arranged such that light emitted by the light source (21) lights the at least one emergency sign (23).

17. The emergency lighting system according to any one of claims when depending on claim 13, wherein
- the light source (21) comprises or corresponds to a plurality of light emitting diodes configured to display information, optional at least one emergency sign (23); and
- the control means of the emergency luminaire (2) is configured to control the displayed information by controlling the plurality of light emitting diodes based on the received information.

## Patentansprüche

1. Notbeleuchtungssystem, umfassend
eine Notleuchte (2) und eine Stromversorgungsvorrichtung (1) zur Versorgung der Notleuchte (2) mit elektrischer Leistung; wobei
die Stromversorgungsvorrichtung (1) elektrisches Kopplungsmittel (12) und einen elektrischen Energiespeicher (13) umfasst; und
die Stromversorgungsvorrichtung (1) dazu konfiguriert ist, elektrische Leistung aus dem elektrischen Energiespeicher (13) der Stromversorgungsvorrichtung (1) an die Notleuchte (2) zu liefern,
**dadurch gekennzeichnet, dass**
das elektrische Kopplungsmittel (12) der Stromversorgungsvorrichtung (1) zur drahtlosen Übertragung der Leistung konfiguriert ist;
die Notleuchte (2) elektrisches Kopplungsmittel (22) zur drahtlosen Leistungsübertragung und eine Lichtquelle (21) umfasst, die so konfiguriert ist, dass sie von dem elektrischen Kopplungsmittel (22) der Notleuchte (2) elektrisch versorgt wird;
die Stromversorgungsvorrichtung (1) dazu konfiguriert ist, die elektrische Leistung drahtlos bereitzustellen, und zwar über eine drahtlose Übertragung der elektrischen Leistung von dem elektrischen Kopplungsmittel (12) der Stromversorgungsvorrichtung (1) zu dem elektrischen Kopplungsmittel (22) der Notleuchte (2);
die Notleuchte (2) dazu konfiguriert ist, drahtlos mit elektrischer Leistung aus dem elektrischen Energiespeicher (13) der Stromversorgungsvorrichtung (1) versorgt zu werden, und zwar über die drahtlose Übertragung der elektrischen Leistung von dem elektrischen Kopplungsmittel (12) der Stromversorgungsvorrichtung (1) an das elektrische Kopplungsmittel (22) der Notleuchte (2); und alle elektrischen Komponenten zur elektrischen Versorgung der Notleuchte (2), einschließlich des elektrischen Energiespeichers (13), aus der Notleuchte (2) ausgebaut und von der Stromversorgungsvorrichtung (1) umfasst sind.

2. Notbeleuchtungssystem nach Anspruch 1, wobei die Stromversorgungsvorrichtung (1) Steuermittel (11) umfasst, das dazu konfiguriert ist, die Lichtemission der Notleuchte (2) durch Steuern der drahtlosen Versorgung der Notleuchte (2) mit elektrischer Leistung von der Stromversorgungsvorrichtung (1) zu steuern.

3. Notbeleuchtungssystem nach Anspruch 2, wobei
- die Stromversorgungsvorrichtung (1) zum elektrischen Anschluss an ein Stromnetz (3) konfiguriert ist; und
- das Steuermittel (11) der Stromversorgungsvorrichtung (1) dazu konfiguriert ist, die Stromversorgungseinrichtung (1) so zu steuern, dass
- im Falle eines Normalbetriebszustands die Stromversorgungsvorrichtung (1) über das elektrische Kopplungsmittel (12) der Stromversorgungsvorrichtung (1) drahtlos elektrischen Strom aus dem Stromnetz (3) an das elektrische Kopplungsmittel (22) der Notleuchte (2) liefert, wenn die Stromversorgungsvorrichtung (1) elektrisch mit dem Stromnetz (3) verbunden ist; und
- im Falle eines Notbetriebszustandes die Stromversorgungsvorrichtung (1) drahtlos über das elektrische Kopplungsmittel (12) der Stromversorgungsvorrichtung (1) elektrische Leistung aus dem elektrischen Energiespeicher (13) an das elektrische Kopplungsmittel (22) der Notleuchte (2) liefert.

4. Notbeleuchtungssystem nach Anspruch 2 oder 3, wobei
- das Steuermittel (11) der Stromversorgungsvorrichtung (1) dazu konfiguriert ist, basierend auf einem Zustand des Stromnetzes (3) zu bestimmen, ob der Normalbetriebszustand oder der Notbetriebszustand vorliegt, wenn die Stromversorgungsvorrichtung (1) elektrisch mit dem Stromnetz (3) verbunden ist.

5. Notbeleuchtungssystem nach einem der Ansprüche 2 bis 4, wobei
- der elektrische Energiespeicher (13) wiederaufladbar ist und die Stromversorgungsvorrichtung (1) eine Ladeschaltung (14) zum Laden des elektrischen Energiespeichers (13) umfasst, und
- das Steuermittel (11) der Stromversorgungsvorrichtung (1) dazu konfiguriert ist, die Ladeschaltung (14) zum Laden des elektrischen Energiespeichers (13) mit elektrischer Leistung aus dem Stromnetz (3) anzusteuern, falls der Normalbetriebszustand vorliegt.

6. Notbeleuchtungssystem nach einem der Ansprüche 2 bis 5, wobei
- das Steuermittel (11) der Stromversorgungsvorrichtung (1) dazu konfiguriert sind, Informationen an die Notleuchte (2) zu übertragen, indem sie ein drahtlos von dem elektrischen Kopplungsmittel (12) der Stromversorgungsvorrichtung (1) an das elektrische Kopplungsmittel (22) der Notleuchte (2) übertragenes Leistungsübertragungssignal moduliert, wenn elektrische Leistung drahtlos zwischen dem elektrischen Kopplungsmittel (12) der Stromversorgungsvorrichtung (12) und dem elektrischen Kopplungsmittel (22) der Notleuchte (2) übertragen wird.

7. Notbeleuchtungssystem nach einem der vorstehenden Ansprüche, wobei
- das elektrische Kopplungsmittel (12) mindestens eine Leiterschleife, optional mindestens eine Spule, zur drahtlosen Leistungsübertragung umfasst oder dieser entspricht.

8. Notbeleuchtungssystem nach einem der vorstehenden Ansprüche, wobei
- das elektrische Kopplungsmittel (12) in die Stromversorgungsvorrichtung (1) eingebettet und/oder zumindest teilweise auf einer Oberfläche (1a) der Stromversorgungsvorrichtung (1) angeordnet ist.

9. Notbeleuchtungssystem nach einem der vorstehenden Ansprüche, wobei die Stromversorgungsvorrichtung (1) dazu konfiguriert ist, wahlweise lösbar an der Notleuchte (2) angebracht zu werden, so dass das elektrische Kopplungsmittel (12) der Stromversorgungsvorrichtung (1) zur drahtlosen Übertragung von elektrischer Leistung an das elektrische Kopplungsmittel (22) der Notleuchte (2) konfiguriert ist, wenn die Stromversorgungsvorrichtung (1) an der Notleuchte (2) angebracht ist.

10. Notbeleuchtungssystem nach einem der vorstehenden Ansprüche, wobei die Stromversorgungsvorrichtung (1) eine Form aufweist, die einen Hohlraum (17) bildet, wobei
- der Hohlraum (17) zur Aufnahme eines Kopplungsteils (24), ggf. einer Kopplungssonde, der Notleuchte (2) konfiguriert ist, so dass das elektrische Kopplungsmittel (12) der Stromversorgungsvorrichtung (1) zur drahtlosen Übertragung elektrischer Leistung an das elektrische Kopplungsmittel (22) der Notleuchte (2) konfiguriert ist, wenn das Kopplungsteil (24) zumindest teilweise im Hohlraum (17) der Stromversorgungsvorrichtung (1) angeordnet ist.

11. Notbeleuchtungssystem nach einem der vorstehenden Ansprüche, wobei
- der elektrische Energiespeicher (13) herausnehmbar in der Stromversorgungsvorrichtung (1) angeordnet ist und die weiteren elektrischen Komponenten der Stromversorgungsvorrichtung (1) in einem Gehäuse der Stromversorgungsvorrichtung (1) eingekapselt sind; oder
- der elektrische Energiespeicher (13) und die weiteren elektrischen Komponenten der Energieversorgungsvorrichtung (1) in einem Gehäuse der Stromversorgungsvorrichtung (1) eingekapselt sind.

12. Notbeleuchtungssystem nach einem der vorstehenden Ansprüche, wobei die Notleuchte (2) Steuermittel umfasst, die dazu konfiguriert sind, die Lichtemission der Lichtquelle (21) durch Steuern der von dem elektrischen Kopplungsmittel (22) an die Lichtquelle (21) gelieferten elektrischen Leistung zu steuern.

13. Notbeleuchtungssystem nach Anspruch 12, wobei das Steuermittel der Notleuchte (2) konfiguriert ist zum
- Empfangen von Informationen von der Stromversorgungsvorrichtung (1) durch Demodulieren eines Leistungsübertragungssignals, das drahtlos von dem elektrischen Kopplungsmittel (22) der Notleuchte (2) empfangen wird, wenn elektrische Leistung zwischen dem elektrischen Kopplungsmittel (22) der Notleuchte (2) und dem elektrischen Kopplungsmittel (12) der Stromversorgungsvorrichtung (1) übertragen wird, und
- Steuern der Lichtquelle (21) basierend auf den empfangenen Informationen.

14. Notbeleuchtungssystem nach einem der Ansprüche, sofern diese von Anspruch 10 abhängen, wobei die Notleuchte (2) ein Kopplungsteil (24), optional eine Kopplungssonde, umfasst, das dazu konfiguriert ist, in dem Hohlraum (17) der Stromversorgungsvorrichtung (1) angeordnet zu werden, so dass das elektrische Kopplungsmittel (22) der Notleuchte (2) dazu konfiguriert ist, drahtlos elektrische Energie von dem elektrischen Kopplungsmittel (12) der Stromversorgungsvorrichtung (1) zu empfangen, wenn das Kopplungsmittel (24) zumindest teilweise in dem Hohlraum (17) der Stromversorgungsvorrichtung (1) angeordnet ist.

15. Notbeleuchtungssystem nach einem der vorstehenden Ansprüche, wobei
- die Lichtquelle (21), das elektrische Kopplungsmittel (22) der Notleuchte (2) und optional das Steuermittel der Notleuchte (2) in einem Gehäuse der Notleuchte (2) versiegelt sind.

16. Notbeleuchtungssystem nach einem der vorstehenden Ansprüche, wobei
- die Notleuchte (2) ein Notzeichenelement umfasst, welches mindestens ein Notzeichen (23) anzeigt; und
- das Notzeichenelement (23) derart angeordnet ist, dass von der Lichtquelle (21) ausgestrahltes Licht mindestens ein Notzeichen (23) beleuchtet.

17. Notbeleuchtungssystem nach einem der Ansprüche, wenn er von Anspruch 13 abhängig ist, wobei
- die Lichtquelle (21) eine Vielzahl von Leuchtdioden umfasst oder ihr entspricht, die dazu konfiguriert sind, Informationen anzuzeigen, optional mindestens ein Notfallzeichen (23); und
- das Steuermittel der Notleuchte (2) dazu konfiguriert ist, die angezeigten Informationen durch Steuern der Vielzahl von Leuchtdioden auf der Grundlage der empfangenen Informationen zu steuern.

## Revendications

1. Système d'éclairage de secours comprenant
un luminaire de secours (2) et un dispositif d'alimentation (1) pour l'alimentation électrique du luminaire de secours (2) ; dans lequel
le dispositif d'alimentation (1) comprend un moyen de couplage électrique (12) et un accumulateur d'énergie électrique (13) ; et
le dispositif d'alimentation (1) est configuré pour fournir de l'énergie électrique au luminaire de secours (2) à partir de l'accumulateur d'énergie électrique (13) du dispositif d'alimentation (1),
**caractérisé en ce que**
le moyen de couplage électrique (12) du dispositif d'alimentation (1) est configuré pour transférer l'énergie sans fil ;
le luminaire de secours (2) comprend un moyen de couplage électrique (22) pour le transfert d'énergie sans fil et une source lumineuse (21) configurée pour être alimentée électriquement par le moyen de couplage électrique (22) du luminaire de secours (2) ;
le dispositif d'alimentation (1) est configuré pour fournir sans fil l'énergie électrique par le biais d'un transfert sans fil de l'énergie électrique du moyen de couplage électrique (12) du dispositif d'alimentation (1) au moyen de couplage électrique (22) du luminaire de secours (2) ;
le luminaire de secours (2) est configuré pour être alimenté sans fil en énergie électrique à partir de l'accumulateur d'énergie électrique (13) du dispositif d'alimentation (1) par le biais dudit transfert sans fil de l'énergie électrique au moyen de couplage électrique (22) du luminaire de secours (2) à partir du moyen de couplage électrique (12) du dispositif d'alimentation (1) ; et tous les composants électriques destinés à l'alimentation électrique du luminaire de secours (2), y compris l'accumulateur d'énergie électrique (13), sont retirés du luminaire de secours (2) et compris dans le dispositif d'alimentation (1).

2. Système d'éclairage de secours selon la revendication 1, dans lequel le dispositif d'alimentation (1) comprend un moyen de commande (11) configuré pour commander l'émission de lumière du luminaire de secours (2) en contrôlant l'alimentation électrique sans fil du dispositif d'alimentation (1) au luminaire de secours (2).

3. Système d'éclairage de secours selon la revendication 2, dans lequel
- le dispositif d'alimentation (1) est configuré pour être connecté électriquement au réseau (3) ; et
- le moyen de commande (11) du dispositif d'alimentation (1) est configuré pour commander le dispositif d'alimentation (1) de telle sorte que
- en cas d'état de fonctionnement normal, le dispositif d'alimentation (1) fournit sans fil par le biais du moyen de couplage électrique (12) du dispositif d'alimentation (1) de l'énergie électrique provenant du réseau (3) au moyen de couplage électrique (22) du luminaire de secours (2), lorsque le dispositif d'alimentation (1) est connecté électriquement au réseau (3) ; et
- en cas d'état de fonctionnement de secours, le dispositif d'alimentation (1) fournit sans fil, par le biais du moyen de couplage électrique (12) du dispositif d'alimentation (1) de l'énergie électrique provenant de l'accumulateur d'énergie électrique (13) au moyen de couplage électrique (22) du luminaire de secours (2).

4. Système d'éclairage de secours selon la revendication 2 ou 3, dans lequel
- le moyen de commande (11) du dispositif d'alimentation (1) est configuré pour déterminer, en fonction de l'état du réseau (3), si l'état de fonctionnement normal ou l'état de fonctionnement de secours est présent, lorsque le dispositif d'alimentation (1) est connecté électriquement au réseau (3).

5. Système d'éclairage de secours selon l'une quelconque des revendications 2 à 4, dans lequel
- l'accumulateur d'énergie électrique (13) est rechargeable et le dispositif d'alimentation (1) comprend un circuit de charge (14) pour charger l'accumulateur d'énergie électrique (13), et
- le moyen de commande (11) du dispositif d'alimentation (1) est configuré pour commander le circuit de charge (14) afin de charger l'accumulateur d'énergie électrique (13) avec de l'énergie électrique provenant du réseau (3) lorsque l'état de fonctionnement normal est présent.

6. Système d'éclairage de secours selon l'une quelconque des revendications 2 à 5, dans lequel
- le moyen de commande (11) du dispositif d'alimentation (1) est configuré pour transmettre des informations au luminaire de secours (2) en modulant un signal de transfert de puissance transféré sans fil du moyen de couplage électrique (12) du dispositif d'alimentation (1) au moyen de couplage électrique (22) du luminaire de secours (2) lorsqu'une puissance électrique est transférée sans fil entre le moyen de couplage électrique (12) du dispositif d'alimentation (12) et le moyen de couplage électrique (22) du luminaire de secours (2).

7. Système d'éclairage de secours selon l'une quelconque des revendications précédentes, dans lequel
- le moyen de couplage électrique (12) comprend ou correspond à au moins une boucle conductrice, éventuellement au moins une bobine, pour un transfert d'énergie sans fil.

8. Système d'éclairage de secours selon l'une quelconque des revendications précédentes, dans lequel
- le moyen de couplage électrique (12) est intégré dans le dispositif d'alimentation (1) et/ou au moins partiellement agencé sur une surface (1a) du dispositif d'alimentation (1).

9. Système d'éclairage de secours selon l'une quelconque des revendications précédentes, dans lequel le dispositif d'alimentation (1) est configuré pour être, éventuellement de manière amovible, fixé au luminaire de secours (2) de sorte que le moyen de couplage électrique (12) du dispositif d'alimentation (1) est configuré pour le transfert sans fil de l'énergie électrique au moyen de couplage électrique (22) du luminaire de secours (2), lorsque le dispositif d'alimentation (1) est fixé au luminaire de secours (2).

10. Système d'éclairage de secours selon l'une quelconque des revendications précédentes, dans lequel le dispositif d'alimentation (1) a une forme formant une cavité (17), dans lequel
- la cavité (17) est conçue pour recevoir une pièce de couplage (24), éventuellement une sonde de couplage, du luminaire de secours (2) de sorte que le moyen de couplage électrique (12) du dispositif d'alimentation (1) est configuré pour un transfert sans fil de l'énergie électrique au moyen de couplage électrique (22) du luminaire de secours (2), lorsque la pièce de couplage (24) est agencée au moins en partie dans la cavité (17) du dispositif d'alimentation (1).

11. Système d'éclairage de secours selon l'une quelconque des revendications précédentes, dans lequel
- l'accumulateur d'énergie électrique (13) est agencé de manière amovible dans le dispositif d'alimentation (1) et les autres composants électriques du dispositif d'alimentation (1) sont scellés dans un boîtier du dispositif d'alimentation (1) ; ou
- l'accumulateur d'énergie électrique (13) et les autres composants électriques du dispositif d'alimentation (1) sont scellés dans un boîtier du dispositif d'alimentation (1).

12. Système d'éclairage de secours selon l'une quelconque des revendications précédentes, dans lequel le luminaire de secours (2) comprend un moyen de commande configuré pour commander l'émission de lumière de la source lumineuse (21) en contrôlant la puissance électrique fournie par le moyen de couplage électrique (22) à la source lumineuse (21).

13. Système d'éclairage de secours selon la revendication 12, dans lequel le moyen de commande du luminaire de secours (2) est configuré pour
- recevoir des informations du dispositif d'alimentation (1) en démodulant un signal de transfert de puissance reçu sans fil par le moyen de couplage électrique (22) du luminaire de secours (2) lorsque la puissance électrique est transférée entre le moyen de couplage électrique (22) du luminaire de secours (2) et le moyen de couplage électrique (12) du dispositif d'alimentation (1), et
- commander la source lumineuse (21) sur la base des informations reçues.

14. Système d'éclairage de secours selon l'une quelconque des revendications dépendant de la revendication 10, dans lequel le luminaire de secours (2) comprend une pièce de couplage (24), éventuellement une sonde de couplage, configurée pour être disposée dans la cavité (17) du dispositif d'alimentation (1) de sorte que le moyen de couplage électrique (22) du luminaire de secours (2) est configuré pour recevoir sans fil l'énergie électrique du moyen de couplage électrique (12) du dispositif d'alimentation (1), lorsque la pièce de couplage (24) est au moins en partie agencée dans la cavité (17) du dispositif d'alimentation (1).

15. Système d'éclairage de secours selon l'une quelconque des revendications précédentes, dans lequel
- la source lumineuse (21), le moyen de couplage électrique (22) du luminaire de secours (2) et éventuellement le moyen de commande du luminaire de secours (2) sont scellés dans un boîtier du luminaire de secours (2).

16. Système d'éclairage de secours selon l'une quelconque des revendications précédentes, dans lequel
- le luminaire de secours (2) comprend un élément de signalisation de secours affichant au moins un panneau de signalisation de secours (23) ; et
- l'élément de signalisation de secours (23) est agencé de telle sorte que la lumière émise par la source lumineuse (21) éclaire l'au moins un panneau de signalisation de secours (23).

17. Système d'éclairage de secours selon l'une quelconque des revendications dépendant de la revendication 13, dans lequel
- la source lumineuse (21) comprend ou correspond à une pluralité de diodes électroluminescentes configurées pour afficher des informations, et éventuellement au moins un panneau de signalisation de secours (23) ; et
- le moyen de commande du luminaire de secours (2) est configuré pour contrôler les informations affichées en commandant la pluralité de diodes électroluminescentes sur la base des informations reçues.
